(19) Europäisches Patentamt
European Patent Office
Office européen des brevets

(11) Publication number: 0 170 420
A2

(12) EUROPEAN PATENT APPLICATION

(21) Application number: 85304677.9

(22) Date of filing: 01.07.85

(51) Int. Cl.[4]: G 11 B 5/72

(30) Priority: 30.07.84 US 635773

(43) Date of publication of application: 05.02.86 Bulletin 86/6

(84) Designated Contracting States: DE FR GB

(71) Applicant: MAGNETIC PERIPHERALS INC.
8100-34th Avenue South
Minneapolis Minnesota 55440(US)

(72) Inventor: Janssen, Robert Allen
9531 Risewood Circle
Eden Prairie Minnesota 55344(US)

(72) Inventor: Reinisch, Ronald Fabian
7333 Gallagher Drive
Edina Minnesota 55435(US)

(74) Representative: Caro, William Egerton et al
J. MILLER & CO. Lincoln House 296-302 High Holborn
London WC1V 7JH(GB)

(54) **A magnetic disk.**

(57) A magnetic disk has a recording surface, and a non-volatile halocarbon lubricant lubricating the recording surface, the lubricant being composed of one or more perhalogenated polycarbon compounds having no polar sites to which water molecules may cross-link and having a viscosity between 50 x $10^{-6}$ and 1000 x $10^{-6}$ $m^2/S$ (50 and 1000 centistokes).

EP 0 170 420 A2

Croydon Printing Company Ltd

# A MAGNETIC DISK

This invention relates to magnetic disks.

A liquid lubricant may be employed on a magnetic disk to protect its recording surface from damage caused by contact with a read/write head, especially during start-up and stopping of rotation of the disk when the head is not flying above the recording surface. The currently preferred lubricant is a perfluorinated polyether polymer such as FOMBLIN (Trade Mark), KRYTOX (Trade Mark) or BRAYCO (Trade Mark) (see U.S. Patent Specifications Nos. 4268556, 4327139 and 4303738).

A problem currently encountered with conventional lubricants is increased friction during start-up, otherwise known as static friction or "stiction". Stiction can lead to damage of the recording surface and is particularly severe in high humidity conditions, forcing elaborate humidity reduction measures to be employed.

We have now discovered that the source of the stiction problem is water molecules cross-linking to adjacent molecules of the polyether polymer of the liquid lubricant by their hydrogen atoms bonding to negative polar elements such as the oxygen of the ether groups of the polyether polymer molecules. Both reduction of the water content of the liquid lubricant and the prevention of water molecules from bonding between adjacent polyether polymer molecules reduces or substantially eliminates stiction. However, no known method has been discovered permanently to reduce the water content of the liquid lubricant (when exposed to humid air, for example, 90% humidity at 32$^{\circ}$C (90$^{\circ}$F) the stiction reappears), and no known additive has been found that is both non-volatile and which does not later separate from the liquid lubricant.

It has now been found that perhalogenated polycarbon compounds not only perform well as liquid lubricants but also eliminate the stiction problem.

Thus according to the present invention there is provided a magnetic disk having a recording surface, and a non-volatile halocarbon lubricant lubricating the recording surface, the lubricant being composed of one or more perhalogenated polycarbon compounds having no polar cites to which water molecules may cross-link and having a viscosity between 50 x $10^{-6}$ and 1000 x $10^{-6}$ $m^2/S$ (50 and 1000 centistokes).

In the preferred embodiment the or each perhalogenated polycarbon compound has the general formula:

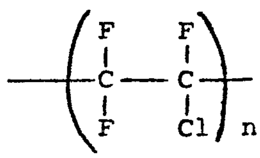

each terminal carbon atom being bonded to a fluorine or chlorine atom, the halocarbon compound having a viscosity between 56 x $10^{-6}$ and 930 x $10^{-6}$ $m^2/S$ (56 and 930 centistokes) at 38°C (100°F). n may be 5, 6, 7 or 8.

Preferably the or each perhalogenated polycarbon compound has a carbon-carbon backbone with fluorine and chlorine substituents.

Three examples of a liquid lubricant according to the present invention were tested and it was found that all substantially eliminated stiction.

EXAMPLE 1

A solution of 2% by weight of perhalogenated polycarbon compound $C_8F_{18}$ having a carbon backbone of eight carbon atoms and all fluorine substituents in 1,1,2-trichloro-1,2,2-trifluoroethane (FREON (Trade Mark)) was sprayed onto a recording surface of a rigid magnetic disk, and hand buffed. Stiction tests were then carried out in an environment where relative humidity was varied from 10% to 90% and temperature was varied between 24°C to 32°C (75°F to 90°F). The tests revealed substantially no stiction and no change in stiction or friction with change of relative humidity.

Whilst this perhalogenated polycarbon compound was satisfactory for eliminating stiction, its molecular weight was insufficient

to yield a viscosity sufficient for long-term stability. The viscosity ranges deemed to be sufficient for non-volatile halocarbon lubricants for magnetic disks are between 50 x $10^{-6}$ and 1000 x $10^{-6}$ $m^2/S$ (50 to 1000 centistokes) at 38°C (100°F). The number of carbon atoms of the perhalogenated polycarbon compound necessary in this Example to yield a viscosity in this range is estimated to be between 12 and 16.

EXAMPLE 2

The second perhalogenated polycarbon compound studied has the formula:

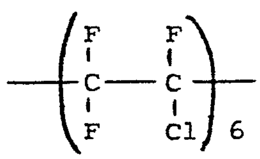

the $C_2F_3Cl$ repeat group being repeated 6 times, and terminating in either a fluorine atom or a chlorine atom. Again a 2% weight solution of this compound in 1,1,2-trichloro-1,2,2-trifluoroethane was prepared, sprayed onto a recording surface of a magnetic disk, and hand buffed. Stiction tests were then performed in an environment where relative humidity was varied from 15% to 75% and temperature was varied between 21°C and 41°C (70°F and 105°F). The tests revealed substantially no stiction and no change in either stiction or friction with change of relative humidity.

This perhalogenated polycarbon compound had a viscosity of 56 x $10^{-6}$ $m^2/S$ (56 centistokes) at 38°C (100°F). This was deemed sufficient to give the halocarbon lubricant long-term stability on the magnetic disk.

EXAMPLE 3

The perhalogenated polycarbon compound studied had the formula:

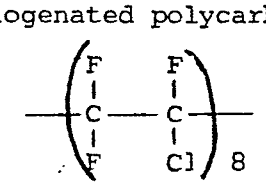

the $C_2F_3$ Cl repeat group being repeated 8 times. The terminating

atoms were either a fluorine atom or a chlorine atom. Again a 2% weight solution of the perhalogenated polycarbon compound was prepared, sprayed onto a recording surface of a magnetic disk, and hand buffed. Stiction tests were then performed in an environment where the relative humidity was varied from 15% to 75% and temperature was varied between 21°C and 41°C (70°F and 105°F). The tests revealed substantially no stiction and no change in either stiction or friction with change of relative humidity.

This perhalogenated polycarbon compound had a viscosity of 700 x $10^{-6}$ $m^2/S$ (700 centistokes) at 38°C (100°F). This was deemed sufficient to give the halocarbon lubricant long-term stability on the magnetic disk.

The preferred perhalogenated polycarbon compounds for liquid lubricants according to the present invention are as illustrated in Examples 2 and 3 where the number of repeat groups is between 5 and 8. This results in a non-volatile halocarbon lubricant having a viscosity between 56 x $10^{-6}$ and 930 x $10^{-6}$ $m^2/S$ (56 and 930 centistokes) at 38°C (100°F). The liquid lubricant is preferably mixed with 1,1,2-trichloro-1,2,2-trifluoroethane, as above, sprayed onto a recording surface of a magnetic disk and then hand buffed.

The invention is not, however, limited to perhalogenated polycarbon compounds as set out in the Examples. A halocarbon lubricant composed of one or more perhalogenated polycarbon compounds having no polar sites to which water molecules may cross-link and having a viscosity between 50 x $10^{-6}$ and 1000 x $10^{-6}$ $m^2/S$ (50 and 1000 centistokes) on a recording surface of a magnetic disk will work because such compounds are all stable, non-volatile, and do not have the polar sites which are the source of the cross-linking problem in perfluorinated polyether polymers currently used as liquid lubricants for magnetic disks.

CLAIMS

1. A magnetic disk having a recording surface, and a non-volatile halocarbon lubricant lubricating the recording surface, the lubricant being composed of one or more perhalogenated polycarbon compounds having no polar sites to which water molecules may cross-link and having a viscosity between $50 \times 10^{-6}$ and $1000 \times 10^{-6}$ $m^2/S$ (50 and 1000 centistokes).

2 A magnetic disk as claimed in claim 1 in which the or each perhalogenated polycarbon compound has the general formula:

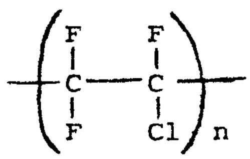

each terminal carbon atom being bonded to a fluorine or chlorine atom, the halocarbon compound having a viscosity between $56 \times 10^{-6}$ and $930 \times 10^{-6}$ $m^2/S$ (56 and 930 centistokes) at 38°C (100°F).

3. A magnetic disk as claimed in claim 2 in which _n_ is 5, 6, 7 or 8.

4. A magnetic disk as claimed in any preceding claim in which the or each perhalogenated polycarbon compound has a carbon-carbon backbone with fluorine and chlorine substituents.